# FASCICULE DE BREVET EUROPEEN

(11) **EP 1 997 178 B1**
(45) Date de publication et mention de la délivrance du brevet: **15.02.2017**
(21) Numéro de dépôt: 07731115.7
(22) Date de dépôt: 08.03.2007
(51) Int. Cl.: H01M 8/04119, H01M 8/0247, H01M 8/026, H01M 4/86, H01M 8/1018

(54) **PILE À COMBUSTIBLE COMPORTANT UN ENSEMBLE CAPABLE DE GÉRER L'EAU PRODUITE PAR LADITE PILE**
BRENNSTOFFZELLE MIT EINER ANORDNUNG ZUR HANDHABUNG DES VON DIESER ZELLE ERZEUGTEN WASSERS
FUEL CELL COMPRISING AN ASSEMBLY CAPABLE OF MANAGING THE WATER GENERATED BY SAID CELL

(30) Priorité: 17.03.2006 FR 0602407
(43) Date de publication de la demande: 03.12.2008
(73) Titulaire: Commissariat à l'Énergie Atomique et aux Énergies Alternatives, 75015 Paris (FR)
(72) Inventeur: LAURENT, Jean-Yves, F-38420 Domène (FR); PLISSONNIER, Marc, F-38320 Eybens (FR); LOCATELLI, Denis, F-38430 Moirans (FR); FAUCHEUX, Vincent, F-38250 Lans en Vercors (FR)
(74) Mandataire: Hecké, Gérard
(86) Numéro de dépôt international: PCT/FR2007/000418
(87) Numéro de publication internationale: WO 2007/118945

(56) Documents cités:
- EP-A1- 0 872 907
- DE-A1- 10 048 182
- FR-A1- 2 857 162
- JP-A- 4 012 462
- JP-A- 7 105 957
- US-A1- 2004 137 311
- US-A1- 2005 208 366

## Description

### Domaine technique de l'invention

L'invention concerne une pile à combustible et plus particulièrement une micropile à combustible comprenant :
- un empilement successif d'une anode, d'une membrane électrolytique et d'une cathode
- et un ensemble disposé sur au moins une partie d'une surface extérieure de ladite cathode et comportant au moins un élément hydrophile en contact avec au moins une première zone de la surface extérieure de la cathode et un élément hydrophobe recouvrant la totalité d'une face de l'élément hydrophile, opposée à la surface extérieure de la cathode.

### État de la technique

Dans le domaine des piles à combustible, il existe actuellement deux catégories de piles, les piles à combustible en empilement de type filtre-presse et les piles à combustible miniatures, réalisées au moyen de techniques issues de la microtechnologie et plus particulièrement par dépôt et structuration de couches minces sur un substrat.

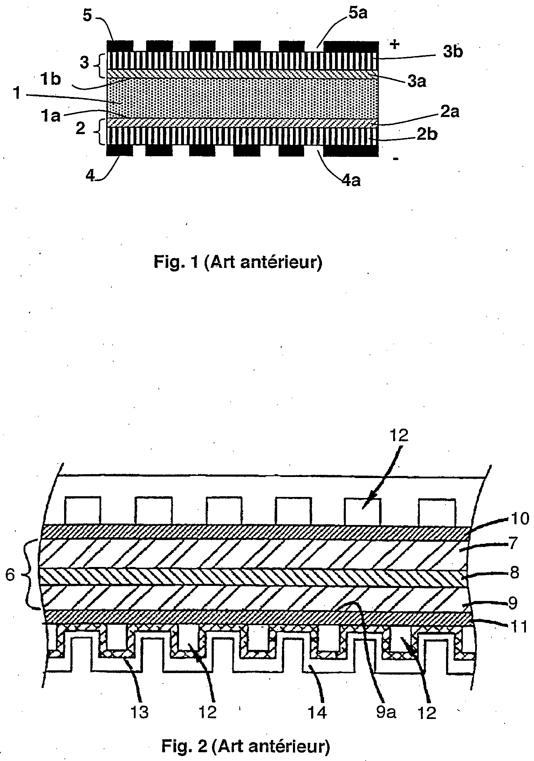

À titre d'exemple, comme illustré sur la figure 1, une pile à combustible de base utilisée dans une pile à combustible miniature. Elle comporte une membrane électrolytique 1 munie de faces avant et arrière 1 a et 1 b. Les faces avant et arrière 1 a et 1 b sont respectivement et successivement recouvertes par des première et seconde couches catalytiques 2a et 3a et des couches de diffusion 2b et 3b. La première couche catalytique 2a et la première couche de diffusion 2b forment l'anode 2 tandis que la seconde couche catalytique 3a et la seconde couche de diffusion 3b forment la cathode 3. Des premier et second collecteurs 4 et 5 sont respectivement disposés sur les faces externes des première et seconde couches de diffusion 2b et 3b. L'empilement EME et les premier et second collecteurs de courant 4 et 5 forment une même cellule élémentaire. Ils sont chacun constitués par un dépôt métallique comportant une pluralité de passages transversaux 4a et 5a destinés à permettre le passage d'un fluide vers une couche de diffusion. Ainsi, l'hydrogène, servant généralement de combustible, peut passer à travers les passages transversaux 4a du collecteur de courant anodique 4 pour atteindre la couche de diffusion 2b de l'anode 2. L'oxygène ou l'air servant généralement de comburant passe à travers les passages transversaux 5a du collecteur de courant cathodique 5 pour atteindre la couche de diffusion 3b de la cathode 3. De même, l'eau produite au cours du fonctionnement de la pile à combustible est évacuée par les mêmes passages transversaux 5a.

Les piles dites en empilement de type filtre-presse comportent généralement un grand nombre de cellules élémentaires disposées en série. Chaque cellule comporte un empilement comprenant une anode et une cathode, séparées par une membrane électrolytique. L'empilement, généralement appelé empilement de type « EME » (Electrode-Membrane-Electrode), est disposé entre deux plaques collectrices de courant. L'ensemble des cellules élémentaires forme un assemblage de type filtre-presse, avec des plaques de serrage boulonnées de part et d'autre d'une série d'empilements EME. Ainsi, la figure 2 illustre une cellule électrochimique de type filtre-presse qui comprend, comme à la figure 1, un ensemble 6 formé par l'anode 7, la membrane électrolytique 8 et la cathode 9 est disposé entre deux couches de distribution de fluide 10 et 11. Les couches 10 et 11 sont des couches conductrices électriquement et elles servent de conduits pour les gaz et les liquides entrant et sortant de la cellule électrochimique depuis et vers des canaux de circulation 12.

Avec ce type de piles à combustible mais également avec les piles à combustible réalisées au moyen de techniques issues de la microtechnologie, l'approvisionnement des électrodes en fluide réactif et l'évacuation des produits formés lors du fonctionnement de la pile posent des problèmes. Plus particulièrement, la gestion de l'eau dans la pile à combustible est particulièrement importante dans la mesure où elle conditionne le fonctionnement de la pile à combustible. En effet, un excès d'eau au sein d'une pile à combustible ou d'une cellule électrochimique peut noyer la cathode. L'accès de l'oxygène ou de l'air aux sites catalytiques de la cathode est alors bloqué et la pile s'arrête de fonctionner.

Comme représenté sur la figure 2, la demande de brevet US-A-2005/0181264 propose d'utiliser une plaque collectrice de courant cathodique particulière améliorant la gestion de l'eau produite par une cellule électrochimique d'une pile de type filtre-presse. La couche 11 disposée sur la surface extérieure 9a de la cathode 9 présente une certaine hydrophobicité de manière à pousser l'eau produite par la cellule électrochimique et contenue dans la cathode 9, vers les canaux 12. L'hydrophobicité de la couche 11 est, cependant, inférieure à celle de la cathode 9. De plus, les parois des canaux 12 sont formées par un empilement d'une couche hydrophile poreuse 13 et d'une couche 14 imperméable aux fluides. La couche hydrophile poreuse 13 attire, par des forces capillaires, l'eau accumulée dans la cathode 9 et la couche imperméable 14 forme une barrière physique entre les différentes cellules électrochimiques, l'ensemble favorisant l'évacuation de l'eau vers les canaux 12.

Cette solution n'est, cependant, pas satisfaisante dans la mesure où l'évacuation totale de l'eau pose également des problèmes de fonctionnement. En effet, cela peut provoquer un assèchement progressif de la membrane électrolytique, diminuant ainsi sa conductivité ionique, ce qui provoque une diminution des capacités de fonctionnement de la pile.

Dans la demande de brevet US2004/0137311, la gestion de l'eau est contrôlée par des supports de diffusion mis en contact avec les couches catalytiques des électrodes d'un empilement de type EME. Les supports de diffusion comportent chacun deux couches superposées : une première couche, en contact avec l'électrode et formée d'une matrice poreuse et de particules destinées à transférer l'eau et une seconde couche hydrophobe recouvrant la totalité de la première couche. La gestion du flux d'eau généré dans la pile à combustible par de tels supports de diffusion n'est, cependant, pas satisfaisante puisque la couche hydrophobe disposée sur la totalité de la première couche présente l'inconvénient de repousser l'eau vers le coeur de la pile. Or, en cas de production importante d'eau, la présence de la couche hydrophobe peut provoquer un risque de noyer la première couche et donc de dégrader les performances de l'empilement.

Le document US2005208366 A1 décrit une pile à combustible qui comporte un ensemble disposé sur au moins une partie d'une surface extérieure de la cathode. L'élément comporte au moins un élément hydrophile en contact avec au moins une première zone de la surface extérieure de la cathode et un élément hydrophobe recouvrant la totalité d'une face de l'élément hydrophile, opposée à la surface extérieure de la cathode. L'élément hydrophobe comporte au moins une ouverture traversante libérant une zone de ladite face de l'élément hydrophile.

Le document FR2857162 A1 divulgue une pile à combustible qui comporte des premier et second collecteurs de courant correspondant respectivement à l'anode et à la cathode. Les premier et second collecteur de courant sont chacun constitués par un dépôt métallique comportant une pluralité de passages transversaux pour un fluide. Ils peuvent être respectivement disposés sur la face externe de l'électrode correspondante ou bien être disposés entre la membrane électrolytique et l'électrode correspondante.

### Objet de l'invention

L'invention a pour but une pile à combustible remédiant aux inconvénients de l'art antérieur. Plus particulièrement, l'invention a pour but une pile à combustible munie d'un ensemble permettant de gérer efficacement l'humidité dans la pile à combustible et présentant des performances optimales.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 illustrent respectivement des premier et second modes de réalisation d'une cellule électrochimique d'une pile de type filtre-presse selon l'art antérieur.
La figure 3 représente l'évolution du débit d'eau dans une cellule électrochimique en fonction de la température, pour trois types de surfaces d'échange.
La figure 4 représente un mode particulier de réalisation d'une pile à combustible selon l'invention.
Les figures 5 et 6 représentent deux variantes de réalisation du mode de réalisation représenté sur la figure 4.

### Description de modes particuliers de réalisation

Pour obtenir une pile à combustible présentant de bonnes performances, il est préférable que la quantité d'eau évacuée, sous forme liquide et/ou évaporée, ne soit pas supérieure à celle produite par la cathode, de manière à ce que la membrane électrolytique ne soit pas asséchée par un manque d'eau.

Or, la quantité d'eau produite par la cathode dépend uniquement du courant de fonctionnement de la pile à combustible tandis que la quantité d'eau évacuée dépend de la température dans la pile à combustible et de la mouillabilité de la surface d'échange entre l'empilement et l'extérieur de la pile à combustible.

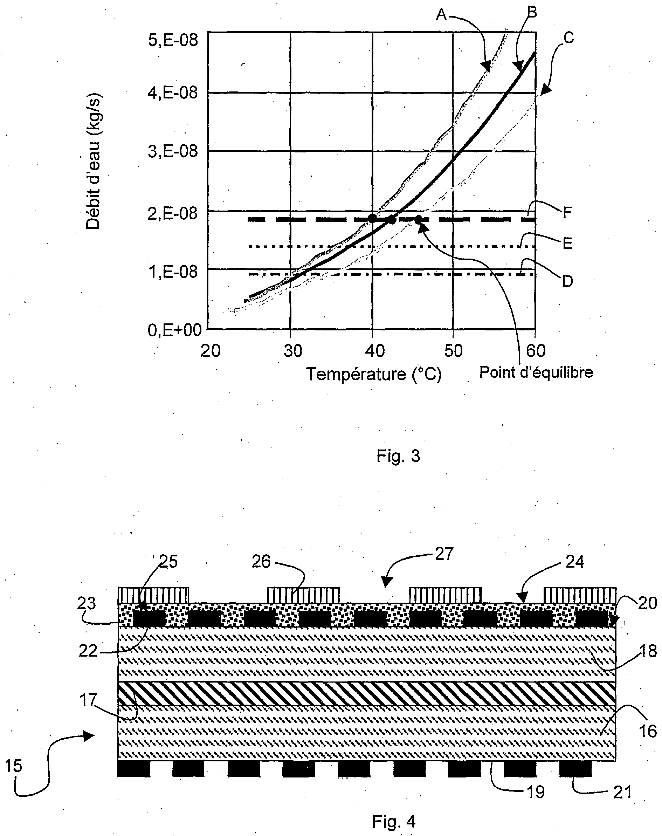

À titre d'illustration, sur la figure 3, les courbes A, B et C représentent l'évolution du débit d'eau évacuée dans une cellule électrochimique en fonction de la température de la pile à combustible, respectivement pour trois type de surfaces d'échange. La surface d'échange correspondant à la courbe B est une surface d'échange de référence, correspondant à la surface extérieure d'une cathode en graphite. Les surfaces d'échange correspondant respectivement aux courbes A et C sont respectivement hydrophobe et hydrophile. La surface d'échange hydrophobe est, par exemple, obtenue en recouvrant la surface extérieure d'une cathode d'un film d'oxycarbure de silicium tandis que la surface hydrophile est obtenue en recouvrant la surface extérieure de la même cathode d'un film d'oxycarbure de silicium et en réalisant une insolation aux rayonnements UV.

Le point d'équilibre entre l'eau produite et l'eau évacuée dans la cellule électrochimique a été déterminé en reportant sur la figure 3, des courbes D, E et F. Les courbes D à F représentent, en effet, l'évolution du débit de l'eau produite par la cathode, pour des courants de fonctionnement respectivement de 100 mA, de 150mA et de 200mA. On constate, ainsi, que pour un débit d'eau produite (courbe D, E ou F), il existe deux points d'équilibre, c'est-à-dire deux températures de fonctionnement possibles, selon les conditions d'environnement. Ces deux points d'équilibre correspondent aux intersections de la courbe D, E ou F avec les courbes A et C.

L'humidité dans l'empilement anode - membrane électrolytique - cathode doit donc être gérée par un ensemble permettant de réguler, de manière contrôlée, l'eau produite par la cathode. Ainsi, selon l'invention, l'eau produite dans une pile à combustible, et plus particulièrement dans une micropile à combustible, est gérée et/ou régulée par un ensemble disposé sur au moins une partie d'une surface extérieure de la cathode. L'ensemble comporte au moins un élément hydrophobe et un élément hydrophile, ayant, de préférence, chacun une épaisseur comprise entre 10µm et 10mm.

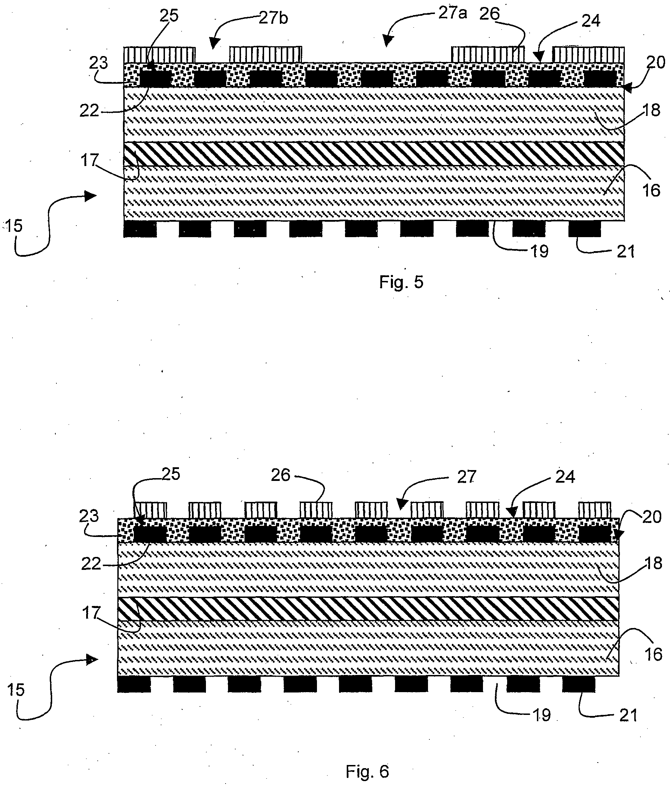

Selon un mode particulier de réalisation représenté sur la figure 4 et selon les variantes représentées sur les figures 5 et 6, une micropile à combustible 15 comporte un empilement successif d'une anode 16, d'une membrane électrolytique 17 et d'une cathode 18. L'anode 16 et la cathode 18 présentent respectivement des surfaces extérieures 19 et 20 sur lesquelles sont respectivement disposés des collecteurs de courant 21 et 22. Les collecteurs de courant 21 et 22 sont intégrés à l'empilement 6. Ils sont chacun formés par une couche mince comportant des passages traversants, libérant des zones desdites surfaces extérieures.

Le collecteur de courant cathodique 22, muni desdits passages traversants, est recouvert par un élément hydrophile, formé, de préférence, par une couche hydrophile 23. Ainsi, les zones de la surface extérieure 20 de la cathode 18, non recouvertes par le collecteur de courant cathodique 22, sont recouvertes par la couche hydrophile 23 de manière à établir un contact entre lesdites zones de la surface extérieure 20 de la cathode 18 et la couche hydrophile 23.

La couche hydrophile 23 comporte, par exemple un matériau choisi parmi le graphite poreux, une céramique traitée pour obtenir une surface hydrophile et un polymère présentant une fonction hydrophile tandis que l'élément hydrophobe peut comporter un matériau choisi parmi les polymères fluorés, l'oxycarbure de silicium amorphe et les nanotubes de carbone.

La couche hydrophile 23 comporte également une face 24, de préférence plane, et opposée à la face qui est en contact avec la surface extérieure 20 de la cathode 18. Sur les figures 4 à 6, l'épaisseur de la couche hydrophile 23 est supérieure à celle du collecteur de courant cathodique 23. Ainsi, le collecteur de courant cathodique 22 comporte une face 25 entièrement recouverte par la couche hydrophile 23. Ladite face 25 du collecteur de courant cathodique 22 est la face opposée à celle qui est en contact avec la cathode 18.

Un élément hydrophobe recouvre la totalité de la face 24 de l'élément hydrophile 23. Il forme une barrière physique à l'eau liquide entre l'environnement extérieur et la micropile à combustible. Par contre, l'élément hydrophobe et l'élément hydrophile sont perméables aux comburants gazeux, tels que l'air ou l'oxygène, de sorte que ceux-ci peuvent accéder, sans difficulté, à la cathode. De plus, comme représenté sur les figures 4 à 6, l'élément hydrophobe comporte au moins une ouverture traversante libérant au moins une zone de la face 24 de l'élément hydrophile 23. Sur les figures 4 à 6, l'élément hydrophobe est sous la forme d'une couche hydrophobe 26 munie d'ouvertures traversantes libérant des zones de la face 24. Sur les figures 4 et 6, les ouvertures traversantes 27 de la couche hydrophobe 26 sont réparties uniformément dans ladite couche tandis que sur la figure 5, elles sont réparties de manière non uniforme.

Sur la figure 5, la couche hydrophobe 26 comporte, en effet, trois ouvertures traversantes. Une première ouverture 27a est sensiblement disposée au centre de la couche 26 et deux ouvertures 27b, moins larges que la première ouverture 27a, sont disposées à proximité des bords de ladite couche 26.

Sur la figure 6, la répartition des ouvertures traversantes 27 dans la couche hydrophobe 26 est réalisée de sorte que les ouvertures traversantes 27 de la couche hydrophobe 26 soient disposées au-dessus des passages traversants du collecteur de courant 22. Les passages du collecteur de courant 22 et les ouvertures de la couche hydrophobe 26 ont, avantageusement une largeur identique, de sorte qu'une ouverture traversante 27 prolonge un passage traversant du collecteur de courant 22. Dans ce cas, les zones hydrophobes de la couche hydrophobe 26, délimitées par les ouvertures traversantes 27, sont plus particulièrement, disposées au-dessus des zones constituant le collecteur de courant 22 et délimitées par les passages traversants.

La régulation de l'humidité dans la pile se fait, ainsi, par un stockage d'eau dans des premières régions de la couche hydrophile 23 tandis l'eau est évacuée par des secondes régions de la couche hydrophile 23. Les premières régions de la couche hydrophile 23 sont les régions de la couche hydrophile 23 recouvertes par la couche hydrophobe 26 et les secondes régions sont celles non recouvertes par ladite couche. L'évacuation de l'eau par les secondes régions de la couche hydrophile 23 est, en effet, réalisée par l'intermédiaire des zones libres de la face 24. Ainsi, la présence des ouvertures traversantes dans la couche hydrophobe 26 permet d'obtenir une rétention localisée de l'eau dans les premières régions de la couche hydrophile et une évacuation localisée dans les secondes régions de ladite couche. À titre d'exemple, dans la variante de réalisation représentée sur la figure 6, le stockage de l'eau est avantageusement réalisé dans des zones où la réaction de la pile est moindre, c'est-à-dire dans des premières régions de la couche hydrophile qui sont non seulement en contact avec la couche hydrophobe 26 mais également avec la face 25 du collecteur de courant 22.

De plus, il est possible de gérer la quantité d'eau retenue dans la pile à combustible, en fonction de la géométrie des couches respectivement hydrophobe et hydrophile. En effet, le volume de stockage d'eau dépend de l'épaisseur de la couche hydrophile tandis que la quantité d'eau évacuée dépend de la largeur des ouvertures traversantes réalisées dans la couche hydrophobe 26. Il est alors possible de trouver un équilibre entre la quantité d'eau évacuée par les zones libres de la face 24 et la quantité d'eau stockée dans les premières régions de la couche hydrophile 23, de manière à conserver une partie d'humidité près de la membrane électrolytique. Il est également possible, dans certains cas, de favoriser l'évacuation de l'eau par rapport à son stockage, en augmentant la largeur des ouvertures traversantes et/ou en diminuant l'épaisseur de la couche hydrophile. Ceci est particulièrement intéressant lorsque la pile présente un courant de fonctionnement élevé. De plus, la forme des ouvertures traversantes peut être de tout type : rond, carré...

La répartition non uniforme des ouvertures traversantes dans la couche hydrophobe présente l'avantage d'obtenir une gestion de l'eau différente entre le centre et le bord de la surface extérieure 20 de la cathode 18. Ceci permet de compenser les différences de fonctionnement pouvant se produire entre la périphérie et le centre de l'empilement 6. En effet, d'une manière générale, l'échauffement dû à la collecte du courant est plus élevé à la périphérie qu'au centre de l'empilement.

Les éléments hydrophile et hydrophobe peuvent être formés soit par des techniques de dépôt issues de la microélectronique, soit par des techniques d'assemblage classiques comme le pressage. Ainsi, l'élément hydrophile peut être déposé, sur la surface extérieure de la cathode, sous forme d'une couche mince, de préférence, constituée par un matériau choisi parmi le graphite poreux, une céramique traitée pour obtenir une surface hydrophile et un polymère présentant une fonction hydrophile telle que, par exemple, la fonction acide (par exemple le Nafion®). Il peut également être formé par un film mince en tissu traité pour obtenir une surface hydrophile ou en polymère, le film étant ensuite pressé sur la surface extérieure 20 de la cathode 18. Une céramique ou un tissu peut en effet être traité pour avoir une surface hydrophile. Ce traitement peut, par exemple, être un traitement par plasma. De la même manière, l'élément hydrophobe peut être formé par dépôt d'une une couche mince, de préférence, constituée par un matériau choisi parmi les polymères fluorés, l'oxycarbure de silicium amorphe et les nanotubes de carbone. Il peut, également, être formé par un film mince en tissu, traité pour obtenir une surface hydrophobe, le tissu étant ensuite pressé sur l'empilement.

À titre d'exemple, dans les modes de réalisation représentés sur les figures 4 et 5, la couche hydrophile 23 peut être déposée sur la surface extérieure 20 de la cathode 18, par enduction d'une solution de gel absorbant, la solution étant ensuite séchée et l'eau évaporée. Puis, la couche hydrophobe 26 peut, par exemple, être déposée par dépôt physique en phase vapeur sur la face 24 de la couche hydrophile 23, au travers d'un masque pochoir définissant la forme des ouvertures traversantes 27 destinées à l'évacuation de l'eau.

## Revendications

1. Pile à combustible comprenant :
- un empilement successif d'une anode (16), d'une membrane électrolytique (17) et d'une cathode (18)
- et un ensemble disposé sur au moins une partie d'une surface extérieure (20) de ladite cathode (18) et comportant au moins un élément hydrophile (23) en contact avec au moins une première zone de la surface extérieure (20) de la cathode (18) et un élément hydrophobe (26) recouvrant la totalité d'une face (24) de l'élément hydrophile (23), opposée à la surface extérieure (20) de la cathode (18) et comportant au moins une ouverture traversante (27) libérant une zone de ladite face (24) de l'élément hydrophile (23), **caractérisée en ce que** la pile comporte un collecteur de courant cathodique (22) en contact avec au moins une seconde zone de la surface extérieure (20) de la cathode (18) et formé d'une couche mince comportant au moins un passage transversal libérant la première zone de la surface extérieure (20) de la cathode (18) et **en ce que** l'ouverture traversante (27, 27a, 27b) de l'élément hydrophobe est disposée au-dessus du passage transversal du collecteur de courant cathodique (22).

2. Pile selon la revendication 1, **caractérisée en ce que** l'ouverture traversante (27, 27a, 27b) de l'élément hydrophobe (26) a une largeur identique à celle du passage transversal du collecteur de courant cathodique (22).

3. Pile selon l'une des revendications 1 et 2, **caractérisée en ce que** le collecteur de courant cathodique comporte des passages transversaux libérant des premières zones de la surface extérieure de la cathode et l'élément hydrophobe (26) comporte des ouvertures traversantes (27) disposées au-dessus des passages traversants du collecteur de courant (22).

4. Pile selon la revendication 3, **caractérisée en ce que** les ouvertures traversantes (27) sont réparties uniformément dans l'élément hydrophobe (26).

5. Pile selon la revendication 3, **caractérisée en ce que** les ouvertures traversantes (27a, 27b) sont réparties de manière non uniforme dans l'élément hydrophobe (26).

6. Pile selon l'une quelconque des revendications 1 à 5, **caractérisée en ce que** l'élément hydrophile (23) comporte un matériau choisi parmi le graphite poreux, une céramique traitée et un polymère présentant une fonction hydrophile.

7. Pile selon l'une quelconque des revendications 1 à 6, **caractérisée en ce que** l'élément hydrophobe (26) comporte un matériau choisi parmi les polymères fluorés, l'oxycarbure de silicium amorphe et les nanotubes de carbone.

8. Pile selon l'une quelconque des revendications 1 à 7 **caractérisée en ce que** l'élément hydrophile (23) et l'élément hydrophobe (26) ont chacun une épaisseur comprise entre 10µm et 10mm.

## Patentansprüche

1. Brennstoffzelle, umfassend:
- eine aufeinanderfolgende Aufschichtung aus einer Anode (16), einer elektrolytischen Membran (17) und einer Kathode (18), und
- eine Anordnung, die auf wenigstens einem Teil einer Außenfläche (20) der Kathode (18) angeordnet ist und die wenigstens ein hydrophiles Element (23) in Kontakt mit wenigstens einem ersten Bereich der Außenfläche (20) der Kathode (18) und ein hydrophobes Element (26) umfasst, das eine gesamte Seite (24) des hydrophilen Elements (23), welche von der Außenfläche (20) der Kathode (18) abgewandt ist, bedeckt und wenigstens eine Durchgangsöffnung (27), die einen Bereich der Seite (24) des hydrophilen Elements (23) freigibt, umfasst,
**dadurch gekennzeichnet, dass** die Zelle einen Kathodenstromkollektor (22) umfasst, der mit wenigstens einem zweiten Bereich der Außenfläche (20) der Kathode (18) in Kontakt ist und von einer dünnen Schicht, die wenigstens einen den ersten Bereich der Außenfläche (20) der Kathode (18) freigebenden Querdurchgang umfasst, gebildet ist, und dass die Durchgangsöffnung (27, 27a, 27b) des hydrophoben Elements oberhalb des Querdurchgangs des Kathodenstromkollektors (22) angeordnet ist.

2. Zelle nach Anspruch 1, **dadurch gekennzeichnet, dass** die Durchgangsöffnung (27, 27a, 27b) des hydrophoben Elements (26) eine Breite aufweist, die mit derjenigen des Querdurchgangs des Kathodenstromkollektors (22) identisch ist.

3. Zelle nach einem der Ansprüche 1 und 2, **dadurch gekennzeichnet, dass** der Kathodenstromkollektor Querdurchgänge umfasst, die erste Bereiche der Außenfläche der Kathode freigeben, und das hydrophobe Element (26) Durchgangsöffnungen (27) umfasst, die oberhalb der durchgehenden Durchgänge des Stromkollektors (22) angeordnet sind.

4. Zelle nach Anspruch 3, **dadurch gekennzeichnet, dass** die Durchgangsöffnungen (27) in dem hydrophoben Element (26) gleichmäßig verteilt sind.

5. Zelle nach Anspruch 3, **dadurch gekennzeichnet, dass** die Durchgangsöffnungen (27a, 27b) in dem hydrophoben Element (26) nicht gleichmäßig verteilt sind.

6. Zelle nach einem der Ansprüche 1 bis 5, **dadurch gekennzeichnet, dass** das hydrophile Element (23) ein Material umfasst, das aus porösem Graphit, einer behandelten Keramik und einem eine hydrophile Funktion aufweisenden Polymer ausgewählt ist.

7. Zelle nach einem der Ansprüche 1 bis 6, **dadurch gekennzeichnet, dass** das hydrophobe Element (26) ein Material umfasst, das aus Fluorpolymeren, amorphem Silizium-Oxikarbid und Kohlenstoffnanoröhren ausgewählt ist.

8. Zelle nach einem der Ansprüche 1 bis 7, **dadurch gekennzeichnet, dass** das hydrophile Element (23) und das hydrophobe Element (26) jeweils eine Dicke im Bereich zwischen 10 µm und 10 mm aufweisen.

## Claims

1. A fuel cell comprising:
- a successive stacking of an anode (16), an electrolytic membrane (17) and a cathode (18),
- and an assembly arranged on at least a part of an outer surface (20) of the cathode (18) and comprising a hydrophilic element (23) in contact with at least a first area of the outer surface (20) of the cathode (18) and with a hydrophobic element (26) covering the whole of a face (24) of the hydrophilic element (23) opposite the outer surface (20) of the cathode (18) and comprising at least one through opening (27) releasing an area of said face (24) of the hydrophilic element (23),
**characterized in that** the fuel cell comprises a cathodic current collector (22) in contact with at least one second area of the outer surface (20) of the cathode (18) and formed by a thin layer comprising at least one transverse passage releasing the first area of the outer surface (20) of the cathode (18) and **in that** the through opening (27, 27a, 27b) of the hydrophobic element is arranged above the transverse passage of the cathodic current collector (22).

2. The fuel cell according to claim 1, **characterized in that** the through opening (27, 27a, 27b) of the hydrophobic element (26) has an identical width to that of the transverse passage of the cathodic current collector (22).

3. The fuel cell according to one of claims 1 and 2, **characterized in that** cathodic current collector comprises transverse passages releasing first areas of the outer surface (20) of the cathode and the hydrophobic element (26) comprises through opening (27) arranged above the transverse passage of the current collector (22).

4. The fuel cell according to claim 3, **characterized in that** the through openings (27) are arranged uniformly in the hydrophobic element (26).

5. The fuel cell according to claim 3, **characterized in that** the through openings (27a, 27b) are arranged in non-uniform manner in the hydrophobic element (26).

6. The fuel cell according to anyone of claims 1 to 5, **characterized in that** the hydrophilic element (23) comprises a material selected from porous graphite, a treated ceramic and a polymer presenting a hydrophilic function.

7. The fuel cell according to anyone of claims 1 to 6, **characterized in that** the hydrophobic element (26) comprises a material selected from the fluorinated polymers, amorphous silicon oxycarbide and carbon nanotubes.

8. The fuel cell according to anyone of claims 1 to 7, **characterized in that** the hydrophilic element (23) and the hydrophobic element (26) each have a thickness comprised between 10µm and 10mm.
